# EUROPEAN PATENT SPECIFICATION

(11) **EP 1 631 623 B1**
(45) Date of publication and mention of the grant of the patent: **31.12.2014**
(21) Application number: 04754757.5
(22) Date of filing: 04.06.2004
(51) Int. Cl.: C08L 77/00, C08L 23/08, C08J 5/18, B32B 27/32

(54) **Multilayer film or sheet comprising SCUFF RESISTANT COMPOSITIONS COMPRISING ETHYLENE ACID COPOLYMERS AND POLYAMIDES**
Mehrschicht-Film oder Folie aus VERSCHLEISSFESTEn ZUSAMMENSETZUNGEN ENTHALTEND ETHYLEN-IONOMERE UND POLYAMIDE
Film multicouche ou feuille à base de COMPOSITIONS RESISTANTES A L'ABRASION COMPORTANT DES COPOLYMERES D'ACIDE ETHYLENE ET DES POLYAMIDES

(30) Priority: 05.06.2003 US 475978 P
(43) Date of publication of application: 08.03.2006
(73) Proprietor: E.I. DU PONT DE NEMOURS AND COMPANY, Wilmington, DE 19898 (US)
(72) Inventor: CHOU, Richard, T., Hockessin, DE 19707 (US); HAUSMANN, Karlheinz, CH-2012 AUvernier (CH)
(74) Representative: Morf, Jan Stefan
(86) International application number: PCT/US2004/018238
(87) International publication number: WO 2004/113445

(56) References cited:
- US-A- 5 674 579
- US-A- 5 700 890
- US-A- 5 859 137
- US-A1- 2002 004 555
- PATENT ABSTRACTS OF JAPAN vol. 1997, no. 08, 29 August 1997 (1997-08-29) & JP 9 111118 A (UNITIKA LTD), 28 April 1997 (1997-04-28)

## Description

### TECHNICAL FIELD

The present invention relates to multilayer films or sheets of compositions of ethylene acid copolymers and polyamides that are useful for scuff and scratch resistant material and their application as decorative and protective films. More specifically, the present invention relates to articles prepared from these compositions having a transparent decorative and protective surface exhibiting improved scratch and scuff resistance.

### BACKGROUND ART

As a result of several new processes, polymer films are being used more frequently for surface decoration and protection instead of coatings. For example, polymer flm decorations increasingly provide freedom of design, lower cost and are environmentally more compatible than the conventional coating process. The surfaces of many sports and industrial articles are designed with protective and decorative films. Many applications demand new materials with excellent processability, mechanical properties, impact toughness, scratch resistance and excellent optical properties. Most importantly, the materials must be available at an affordable cost for broad applications.

Ionomers are thermoplastic resins that contain metal ions in addition to organic-chain molecules. Ionomers have solid-state properties characteristic of cross-linked polymers and melt-fabricability properties characteristic of uncrosslinked thermoplastic polymers (see for example U.S. Patent Number 3,264,272). As disclosed in U.S. Patent Number 3,264,272, it is not essential that only one type of metal ion be employed in the formation of the ionomers, and more than one type of metal ion may be preferred in certain applications. However, commercially available ionomers such as Surlyn^{®} are neutralized with a single metal ion, commonly zinc or sodium. Major applications of ionomers are in the areas of packaging and for sporting goods, especially golf balls.

Owing to their water-like clarity and high toughness, ionomers such as those available from DuPont under the trademark Surlyn^{®} have also been disclosed for use in protective and decorative applications, such as a top layer for floor tile (PCT patent application publication WO 95/11333 describes the use of ionomers as the topcoat layer of a multilayer flooring material). Scuff resistance can be defined as the resistance to the creation of a permanent surface mark through the frictional heating generated by a moving object sliding over the surface of the protective surface. Scuff resistance is a particularly important property when used in protective and decorative applications. Typical ethylene copolymer ionomers as described above have a melting temperature below 100°C and attempts to overcome this shortcoming find their natural barrier at 120 °C, which is the melting temperature of low-density polyethylene. Because of their relatively low melting temperature, ethylene copolymer ionomers can be particularly vulnerable to scuffing. This may result in insufficient scuff resistance of ionomers in everyday use and greatly limits the use of ionomers in more demanding applications.

Previously, when problems of scratching or scuffing a surface or a film made of an ionomer film or sheet arose, these problems had to be overcome by crosslinking these ionomers by external crosslinking agents such as organic compounds or epoxy and formaldehyde functionalities. For example, U.S. Patent Numbers 3,264,269, and 3,317,631 treat this problem and claim solutions to it. U.S. Patent Number 3,264269 teaches a process for crosslinking polymers containing carboxyl groups that comprises imbibing a shaped article of the polymer in a diisocyanate. The disadvantages of this process include its two-step nature (processing and imbibing) combined with the toxic nature of diisocyanates. U.S. Patent Number 3,317,631 describes thermosetting compositions based on ethylene carboxylic acid copolymers and melamine formaldehyde resins giving essentially a thermoset polymer without possibility of thermoplastic processability.

Other solutions to this inherent problem attempt to increase the melting temperature through different synthesis conditions (U.S. Patent Number 4,248,990). The shortcomings of this approach consist of increasing crystalline regions in the polymer that lead to reduced clarity while providing only a modest increase in melting temperature and therefore scuff resistance. Also, scratch resistance suffers significantly.

The manners of overcoming this problem described above are not free of shortcomings. Either they are limited in effectiveness by the inherent melting temperature of polyethylene or they add significant cost or feasibility problems to the processor and/or end user of the ionomer sheets and films used for protective applications.

Polyamides (nylon), and in particular nylon-6, are important engineering polymers that can be used for many applications. However, they cannot be used for decorative and protective film applications. In order to use nylon-6 for decorative and protective film applications, it has to be modified by improving toughness, reducing stiffness and enhancing optical transparency. Adding typical modifiers that could bring about a desirable toughness and stiffness tend to reduce the optical clarity and can turn nylon-6 into an opaque film. Mixing of polyamides and ionomers such as those described in U.S. Patent Number 3,317,631 usually leads to blends with good scratch resistance and other surface properties but with very poor optical properties (i.e. opacity). Blends of this type typically consist of microscopic particles of one polymer dispersed in a continuous phase of the other polymer. Poorly dispersed and/or large particles tend to scatter rather than transmit light. As a result the polymer blends tend to be opaque.

Recently a new family of ionomers has been disclosed in U.S. Patent Number 5,700,890, wherein neutralized ethylene acid copolymers are prepared using dicarboxylic acids, or derivatives thereof, as monomers in addition to the monocarboxylic acids used in typical ionomers. These ionomers have been found to have better compatibility with polyamides than typical ionomers (see U.S. Patent Number 5,859,137 and US 2002/0004555). These ionomeric copolymers may further contain an alkyl acrylate comonomer. The excellent compatibility of these ethylene copolymer ionomers with polyamides allows the formation of alloys with higher crystalline melting temperatures.

### DISCLOSURE OF THE INVENTION

We have found that certain blends of polyamides and ionomers comprising dicarboxylic acid comonomers with the ionomer present at higher weight percent lead to thermoplastic compositions with excellent transparency due to the better dispersion of the two polymers within each other. Furthermore we have found that the resulting blends are characterized by having a very narrow particle size distribution and that a film or the resulting surface of an article made from such blends show high toughness, good mechanical properties, excellent scratch and scuff resistance and, most importantly, good optical properties.

Consequently, the multilayer films an sheets comprising the compositions of ethylene copolymers and polyamides of the present invention can be advantageously used as protective coatings or layers on scuff- and scratch-exposed objects. For example, the compositions useful in the present invention can be used as protective wear layers for sporting goods (such as skis, boots for skiing or skating), exterior coatings of parts for vehicles, decorative laminates and other objects such as floor coverings. They may also be used for other wear- and scratch-exposed objects such as seal layers in packaging structures that contain hard, abrasive objects such as dry soup mixes.

The multilayer films or sheets useful in the present invention provide superior scuff resistance over films and sheets of typical ionomer compositions by taking advantage of the transparency and higher crystalline melting temperature of compositions of ethylene dicarboxylic acid copolymers and polyamides. The multilayer films and sheets of the present invention overcome the aforementioned problems of scratching and scuffing by providing a means of achieving superior crystalline melting temperature while surprisingly maintaining a high level of transparency. This is possible through the excellent dispersibility between polyamides and ionomers comprising dicarboxylic acid moieties.

Thu the present invention provides a multilayer film or sheet or molded articles therefrom of scuff- and scratch-resistant transparent material, in particular for application as a protective transparent coating or layer on scuff and scratch-exposed objects according to claims 1 to 13.

Advantageously, the ethylenically unsaturated dicarboxylic acid or derivative comonomer content of the ionomeric copolymer be in the range of 4 to 10 weight % of the ionomeric copolymer. Significant improvement in the combination of haze and scuff resistance is observed at greater than 5 weight % ethylenically unsaturated dicarboxylic acid comonomer content particularly when the ionomeric copolymer (component 2) represents greater than 55 weight % of the ionomeric copolymer and polyamide (component 1) combined total weight. Most preferably, 6 to 8 weight % of maleic acid monomethylester comonomer content is employed with an ethylene/methacrylic acid/maleic acid monomethylester copolymer wherein said copolymer is from 40 to 60 percent neutralized.

The composition may be processed by e.g. extruding or casting a sheet or blowing a film, or injection molding a molded article. Accordingly, the present invention also provides articles comprising the composition as described above. Of note are articles wherein the composition of the invention is a transparent protective scratch-resistant film or sheet on said article.

### DETAILED DESCRIPTION OF THE INVENTION

"Copolymer" means polymers containing two or more different monomers. The terms "dipolymer" and "terpolymer" mean polymers containing only two and three different monomers respectively. The phrase "copolymer of various monomers" means a copolymer whose units are derived from the various monomers.

Thermoplastic resins are polymeric materials that can flow when heated under pressure. Melt index (MI) is the mass rate of flow of a polymer through a specified capillary under controlled conditions of temperature and pressure. It is typically measured according to ASTM 1238.

This invention provides a multilayer film or sheet comprising a polymeric blend that is a marriage of a polyamide such as nylon-6 and an ionomer selected from a special family of ionomers (denoted anhydride Surlyn^{®}) to provide new materials that are highly suitable for protective and decorative applications. In essence, the new materials overcome some of the major deficiencies of both polyamides and ionomers, while continuing to retain most of the desirable attributes. As indicated above, the ionomers used in this invention are selected from a family of Surlyn^{®} ionomers containing higher amounts of dicarboxylic acid moieties. The presence of more dicarboxylic acid moieties in the ionomers enhances the compatibility with polyamides and provides blends with very good transparency. The higher amounts of dicarboxylic acid moieties provide two unique features to blends of anhydride Surlyn^{®} and a polyamide, such as nylon 6: first, the anhydride Surlyn^{®} is dispersed in the polyamide in extremely fine particles and second, the particle size distribution is very narrow.

lonomeric resins ("ionomers") are ionic copolymers of an olefin such as ethylene (E) with a metal salt of an unsaturated carboxylic acid, such as acrylic acid (AA), methacrylic acid (MAA), and/or other acids, and optionally softening comonomers. At least one alkali metal, transition metal, or alkaline earth metal cation, such as lithium, sodium, potassium, magnesium, calcium, or zinc, or a combination of such cations, is used to neutralize some portion of the acidic groups in the copolymer resulting in a thermoplastic resin exhibiting enhanced properties. For example, a copolymer of ethylene and acrylic acid can then be at least partially neutralized by one or more alkali metal, transition metal, or alkaline earth metal cations to form an ionomer. Copolymers can also be made from an olefin such as ethylene, an unsaturated carboxylic acid and other comonomers such as alkyl (meth)acrylates providing "softer" resins that can be neutralized to form softer ionomers.

The ionomers useful in this invention consist of a family of Surlyn® ionomers containing higher amounts of dicarboxylic acid moieties that are derived from ethylenically unsaturated dicarboxylic acid comonomers, such as maleic anhydride and ethyl hydrogen maleate, at least partially neutralized by one or more alkali metal, transition metal, or alkaline earth metal cations (denoted as anhydride Surlyn®). They are copolymers of ethylene, an α,β-unsaturated C₃-C₈ carboxylic acid and at least one comonomer that is an ethylenically unsaturated dicarboxylic acid at an amount of from about 3 weight % to about 25 weight %. Preferably, the dicarboxylic acid comonomer(s) are present in an amount from about 4 weight % to about 10 weight %. The unsaturated dicarboxylic acid comonomers are, for example, maleic anhydride (MAH), ethyl hydrogen maleate (also known as maleic acid monoethylester - MAME), itaconic acid (ITA), etc.

Some non-neutralized ethylene acid copolymers comprising lower amounts of ethylenically unsaturated dicarboxylic acid comonomers are known (see U.S. Patent Number 5,902,869), as are their ionomeric derivatives (see U.S. Patent Number 5,700,890).

As indicated above, comonomers such as alkyl (meth)acrylates can be included in the ethylene acid copolymer to form a copolymer of various monomers that can be neutralized with alkali metal, alkaline earth metal or transition metal cations. Preferred are comonomers selected from alkyl acrylate and alkyl methacrylate wherein the alkyl groups have from 1 to 8 carbon atoms, and more preferred are comonomers selected from methyl acrylate, ethyl acrylate and n-butyl acrylate (nBA). The alkyl (meth)acrylates are included in amounts from 0 to about 30 weight % alkyl (meth)acrylate and preferably from 0 to about 15 weight %.

Examples of copolymers useful in this invention include copolymers of ethylene, methacrylic acid and ethyl hydrogen maleate (E/MAA/MAME) and copolymers of ethylene, acrylic acid and maleic anhydride (E/AA/MAH).

Neutralization of an ethylene acid copolymer can be effected by first making the ethylene acid copolymer and treating the copolymer with inorganic base(s) with alkali metal, alkaline earth metal or transition metal cation(s). The copolymer can be from about 10 to about 99.5 % neutralized with at least one metal ion selected from lithium, sodium, potassium, magnesium, calcium, barium, lead, tin, zinc, aluminum; or combinations of such cations. Typically, neutralization will be from about 10 to about 70 %. Preferably the copolymer has from about 35 to about 70 % of the available carboxylic acid groups ionized by neutralization with at least one metal ion selected from sodium, zinc, lithium, magnesium, and calcium; and more preferably zinc or magnesium. Of particular note are ionomers comprising zinc as a neutralizing cation. Also of note are copolymers wherein the acid groups are neutralized with a combination of zinc and magnesium ions. Methods for preparing ionomers from copolymers are well known in the art.

Polyamides used in the present invention are well known to those skilled in the art. Polyamides suitable for this invention are generally prepared from lactams or amino acids (e.g. nylon-6 or nylon-11), or prepared from condensation of diamines such as hexamethylene diamine with dibasic acids such as succinic, adipic, or sebacic acid. Copolymers and terpolymers of these polyamides are also included. Preferred polyamides useful in the present invention include polyepsiloncaprolactam (nylon-6); polyhexamethylene adipamide (nylon-6,6); nylon-11; nylon-12, nylon-12,12 and copolymers and terpolymers such as nylon-6/6,6; nylon-6,10; nylon-6,12; nylon-6,6/12; nylon-6/6,6/6,10 and nylon-6/6T. More preferred polyamides are polyepsiloncaprolactam (nylon-6), polyhexamethylene adipamide (nylon-6,6), and most preferred is nylon-6. Although these polyamides described above are the preferred polyamides, other polyamides such as amorphous polyamides are not explicitly excluded.

The multilayer films or sheets of the present invention can optionally comprise additional thermoplastic materials blended with polyamide component (1) and ionomeric copolymer component (2). Blending additional components allows one to more easily modify the properties of a composition of this invention by manipulating the amount and type of additional components present in the composition in addition to varying the percentages of the monomers in the ethylene acid copolymer. Furthermore, blending additional thermoplastic materials can allow for easier, lower cost manufacture of polymer compositions by allowing one to prepare fewer base resins that can be subsequently modified to obtain desired properties. Examples of other thermoplastic materials that can be used in addition to the components (1) and (2) include nonionomeric thermoplastic copolymers and/or ionomeric thermoplastic copolymers. The additional nonionic thermoplastic polymer components can be selected from among copolyetheresters, copolyetheramides, elastomeric polyolefins, styrene diene block copolymers, thermoplastic polyurethanes, etc., these classes of polymers being well known in the art (see below for more detailed descriptions of these materials).

Of particular note are blends of component (1) and component (2) further comprising conventional ionomers (i.e. ionomers that do not comprise a dicarboxylic acid comonomer). Accordingly, compositions of this invention include blends of component (1) and component (2), as previously defined, further comprising (3) one or more E/X/Y copolymers where E is ethylene, X is a C₃ to C₈ α,β ethylenically unsaturated carboxylic acid, and Y is a comonomer selected from alkyl acrylate and alkyl methacrylate wherein the alkyl groups have from 1 to 8 carbon atoms, wherein X is present in from about 2 to about 30 weight % of the E/XIY copolymer, Y is present from 0 to about 40 weight % of the E/XIY copolymer, at least partially neutralized by one or more alkali metal, transition metal, or alkaline earth metal cations. Non-limiting, illustrative examples of conventional ionomers include E/15MAA/Na, E/19MAA/Na, E/15AA/Na, E/19AA/Na, E/15MAA/Mg and E/19MAA/Li (wherein E represents ethylene, MAA represents methacrylic acid, AA represents acrylic acid, the number represents the weight % of monocarboxylic acid present in the copolymer and the atomic symbol represents the neutralizing cation). When such conventional ionomer or combination of conventional ionomers are added to the blend of polyamide and ionomeric copolymer containing the dicarboxylic acid comonomer, the conventional ionomers can be a substitute for up to half (50% by weight) of component 2.

The multilayer films or sheet of the present invention can additionally comprise optional materials, such as conventional additives used in polymeric materials including: plasticizers, stabilizers, antioxidants, ultraviolet ray absorbers, hydrolytic stabilizers, anti-static agents, dyes or pigments, fillers, fire-retardants, lubricants, reinforcing agents such as glass fiber and flakes, processing aids, antiblock agents, release agents, and/or mixtures thereof.

The multilayer films or sheets of the present invention can be formed into articles by various means known to those skilled in the art. For example, the compositions of this invention can be molded or extruded to provide an article that is in a desired shape. The compositions of this invention can be cut, injection molded, overmolded, laminated, extruded, milled to provide a desired shape and size. Optionally, articles comprising the conductive thermoplastic composition of this invention may be further processed.

Articles of this invention comprising the multilayer films or sheets compositions comprising the ethylene acid copolymer-polyamide blends may further comprise other components. For example, the films and layer of this invention may be included as one or more layers of a multilayer polymeric structure. The layer(s) of this invention and other polymeric layers may be formed independently and then adhesively attached to one another to form an article of this invention. The article of this invention may also be fabricated by extrusion coating or laminating some or all of the layers onto a substrate. Examples of articles of this invention include: an article comprising a composition of this invention transformed into a transparent protective scratch-resistant film or sheet on a scratch-exposed object; an article comprising a composition of this invention that is a sheet used as a transparent scratch-resistant layer on auto interior or exterior applications; an article comprising a film or sheet of this invention that is a sheet used as a transparent scratch-resistant layer for flooring tiles or sheets; an article comprising a film or layer of this invention that is a sheet used as a transparent scratch-resistant layer for a sporting good; and an article comprising a film or layer of this invention that is a film used as packaging film for dry abrasive goods.

Some of the components of an article of this invention may be formed together by coextrusion, particularly if the components are relatively coplanar. Thus, this invention is a film or sheet comprising a layer of this invention and one or more additional layers of different thermoplastic material(s) in a multilayer coextruded film or sheet. For example, additional layers of thermoplastic resins may be included to provide structure layers to which the film or sheet of this invention is adhered to provide protection or improve the appearance of the article. Of note are multilayer structures comprising ionomeric materials in at least one additional layer. This multilayer structure could be further processed by thermoforming the sheet into a shaped article. For example, a sheet of the multilayer structure could be formed into a casing element for a portable communication device or it could be formed into a shaped piece that could be included in an automotive part such as a bumper, fender or panel.

Examples of other thermoplastic materials that can be used to form a component of an article in addition to a component formed from the compositions of the present invention in multicomponent or multilayer structures (e.g. films or sheets) can be selected from nonionomeric thermoplastic copolymers and/or ionomeric thermoplastic copolymers. The additional thermoplastic polymer components can be selected from among copolyetheresters, copolyetheramides, elastomeric polyolefins, styrene diene block copolymers, thermoplastic polyurethanes, these classes of polymers being well known in the art.

Nonionic thermoplastic resins include, by way of non-limiting illustrative examples, thermoplastic elastomers, such as polyurethane, poly-ether-ester, poly-amide-ether, polyether-urea, PEBAX (a family of block copolymers based on polyether-block-amide, commercially supplied by Atochem), styrene-butadiene-styrene (SBS) block copolymers, styrene(ethylene-butylene)-styrene block copolymers, etc., polyamide (oligomeric and polymeric), polyesters, polyolefins including polyethylene, polypropylene, ethylene/propylene copolymers, ethylene copolymers with various comonomers, such as vinyl acetate, (meth)acrylates, (meth)acrylic acid, epoxy-functionalized monomer, CO, functionalized polymers with maleic anhydride, epoxidization etc., either by copolymerization or by grafting, elastomers such as EPDM, metallocene catalyzed PE and copolymer, ground up powders of the thermoset elastomers, etc.

Non-limiting, illustrative examples of conventional ionomers include E/15MAA/Na, E/19MAA/Na, E/15AA/Na, E/19AA/Na, E/15MAA/Mg and E/19MAA/Li (wherein E represents ethylene, MAA represents methacrylic acid, AA represents acrylic acid, the number represents the weight % of monocarboxylic acid present in the copolymer and the atomic symbol represents the neutralizing cation).

Copolyetheresters are discussed in detail in patents such as U.S. Patent Numbers 3,651,014; 3,766,146; and 3,763,109. Preferred copolyetherester polymers are those where the polyether segment is obtained by polymerization of tetrahydrofuran and the polyester segment is obtained by polymerization of tetramethylene glycol and phthalic acid. The more polyether units that are incorporated into the copolyetherester, the softer the polymer.

The copolyetheramides are also well known in the art as described in U.S. Patent Number 4,331,786, for example. They are comprised of a linear and regular chain of rigid polyamide segments and flexible polyether segments.

The elastomeric polyolefins are polymers composed of ethylene and higher primary olefins such as propylene, hexene, octene and optionally 1,4-hexadiene and or ethylidene norbornene or norbornadiene. The elastomeric polyolefins can be functionalized with maleic anhydride.

Thermoplastic polyurethanes are linear or slightly chain-branched polymers consisting of hard blocks and soft elastomeric blocks. They are produced by reacting soft hydroxy-terminated elastomeric polyethers or polyesters with diisocyanates such as methylene diisocyanate (MDI) or toluene diisocyanate (TDI). These polymers can be chain extended with glycols, diamines, diacids, or aminoalcohols. The reaction products of the isocyanates and the alcohols are called urethanes and these blocks are relatively hard and high-melting. These hard, high-melting blocks are responsible for the thermoplastic nature of the polyurethanes.

Block styrene diene copolymers are composed of polystyrene units and polydiene units. The polydiene units are derived from polybutadiene, polyisoprene units or copolymers of these two. In the case of the copolymer it is possible to hydrogenate the polyolefin to give saturated rubbery backbone segments. These materials are usually referred to as SBS, SIS or SEBS thermoplastic elastomers and they can also be functionalized with maleic anhydride.

A laminate film of the present invention can be prepared by coextrusion as follows: granulates of the various components are melted in extruders. The molten polymers are passed through a die or set of dies to form layers of molten polymers that are processed as a laminar flow. The molten polymers are cooled to form a layered structure. Molten extruded polymers can be converted into a film using a suitable converting technique. For example, a film of the present invention can also be made by coextrusion followed by lamination onto one or more other layers. Other suitable converting techniques are, for example, blown film extrusion, cast film extrusion, cast sheet extrusion and extrusion coating.

A film of the present invention can be further oriented beyond the immediate quenching or casting of the film. The process comprises the steps of (co)extruding a laminar flow of molten polymers, quenching the (co)extrudate and orienting the quenched (co)extrudate in at least one direction. The film may be uniaxially oriented, or it can be biaxially oriented by drawing in two mutually perpendicular directions in the plane of the film to achieve a satisfactory combination of mechanical and physical properties.

Orientation and stretching apparatus to uniaxially or biaxially stretch film are known in the art and may be adapted by those skilled in the art to produce films of the present invention. Examples of such apparatus and processes include, for example, those disclosed in U.S. Patent Numbers 3,278,663; 3,337,665; 3,456,044; 4,590,106; 4,760,116; 4,769,421; 4,797,235 and 4,886,634.

In one embodiment of the present invention, a film of the present invention is oriented using a double bubble extrusion process, where simultaneous biaxial orientation may be effected by extruding a primary tube which is subsequently quenched, reheated and then expanded by internal gas pressure to induce transverse orientation, and drawn by differential speed nip or conveying rollers at a rate which will induce longitudinal orientation.

The processing to obtain an oriented blown film is known in the art as a double bubble technique, and can be carried out as described by Pahlke in U.S. Patent Number 3,456,044. More particularly, a primary tube is melt extruded from an annular die. This extruded primary tube is cooled quickly to minimize crystallization and then collapsed. It is then heated to its orientation temperature (for example, by means of a water bath). In the orientation zone of the film fabrication machine a secondary tube is formed by inflation, thereby the film is radially expanded in the transverse direction and pulled or stretched in the machine direction at a temperature such that expansion occurs in both directions, preferably simultaneously; the expansion of the tubing being accompanied by a sharp, sudden reduction of thickness at the draw point. The tubular film is then again flattened through nip rolls. The film can be reinflated and passed through an annealing step (thermofixation), during which step it is heated once more to adjust the shrink properties. In some applications, it may be desirable to maintain the film in a tubular form. For preparing flat films the tubular film can be slit along its length and opened up into flat sheets that can be rolled and/or further processed.

The multilayer films or sheets of the present invention may be laminated to substrates including sheets or films of polymeric materials including nonwoven materials. The multilayer films or sheets of the present invention may also be laminated onto other nonpolymeric materials such as glass, paper, metal foil. For example, sheets or films of the present invention can be adhered to substrates to provide flooring tiles or sheets by coextrusion, extrusion coating or lamination techniques.

As indicated above, sheets or films of the present invention can be adhered to shaped substrates to provide a protective layer. For example, sheets can be thermoformed by heat and/or pressure to adhere to a substrate to form an automotive part or a sporting good.

Films and sheets of the present invention can also be adhered to shaped substrates by injection molding or compression molding.

While the invention has been particularly shown and described with reference to the preferred embodiments thereof, it will be understood by those skilled in the art that various changes in form and details may be made without departing from the spirit and scope of the invention.

### EXAMPLES

The following Examples are merely illustrative, and are not to be construed as limiting the scope of the invention described and/or claimed herein.

### Description of processing and testing of materials:

Examples of thermoplastic compositions for producing a film or sheet or molded articles of scuff- and scratch-resistant transparent material of this invention comprise neutralized ethylene acid copolymers with monocarboxylic and dicarboxylic acids as monomers blended with polyamides. See Table 1 below for specific examples. Table 1 reports the properties of blends of a polyamide (i.e.nylon-6) and neutralized ethylene acid copolymers with monocarboxylic and dicarboxylic acids as monomers (i.e. anhydride Surlyn^{®}). The blends were prepared by melt mixing the base resins in a 30-mm twin-screw extruder. The polymers used in Table 1 are:
Nylon-6: Ultramid B3 (from BASF)
Anhydride Surlyn^{®} A: a terpolymer comprising ethylene, 11 weight % of methacrylic acid and 6 weight % of maleic anhydride monoethylester wherein nominally 40% of the available carboxylic acid moieties are neutralized with zinc cations (E/11MAA/6MAME/40Zn), having a melt temperature of 98°C.
Anhydride Surlyn^{®} B: a terpolymer comprising ethylene, 11 weight % of methacrylic acid and 6 weight % of maleic anhydride monoethylester wherein nominally 60% of the available carboxylic acid moieties are neutralized with zinc cations (E/11MAA/6MAME/60Zn).

The resulting blends were extruded to form either injection-molded plaques or films as described further below.

The Izod impact was measured by using ASTM D-256 with an injection-molded specimen. The tensile strength was measured using ASTM D-638 with press-molded films about 10-15 mil thick. The transmittance haze was measured according to ASTM D1003 by using press-molded films about 10-15 mil thick.

Sheet of the blends can be prepared on a laboratory 2-roll mill and pressing the so-obtained sheet in a hydraulic press into plaques of the dimensions 100mm x 100mm x 3 mm. These plaques were then tested immediately and after one month for scratch resistance using a scratch tester by Eirichsen according to ISO1518 where a mass between 0.1 and 2 kg is applied to a needle that is drawn over the surface of the plaque. This apparatus measures the force in Newtons at which a scratch mark is visible on the surface.

A scuff test was also performed. This type of test is not standardized; different versions are used by those skilled in the art of scuff testing. Usually the severity of a scuff mark is related to the ease of melting of the polymer under the influence of frictional heat. Scuff tests typically consist of subjecting the sample surface to the high-speed friction of a moving object. In this case, the moving object was the Taber abrader wheel CSO according to ASTM D3389. The wheel was moved over the sample surface using a pendulum with a pendulum radius of 86 cm and a mass of 2.96 kg. The Taber abrader wheel is fixed in a way that the axis of the wheel creates an angle of 45 degrees to the scuffed surface. Furthermore the scuffed or to be scuffed surface of the sample is positioned at an angel of 5 degrees to the floor/ground surface in order to decelerate the movement of the pendulum. The resulting scuff marks were judged on a scale of 1 to 5; 1 being minor and 5 being severe. For purposes of this scuff measurement a commercial grade Surlyn^{®} (E/15%MAA-Zn) was assigned the rating "5" (i.e., failed) and a comparative rating of between 2 and 3 or lower was considered passing.

Comparative Examples C-1 and C-2 (i.e. blends of nylon-6 with low amounts of anhydride Surlyn^{®}) exhibit low impact strength and poor optical properties (as indicated by the haze values reported in Table 1). In contrast, the data in Table 1 clearly demonstrate that the blends prepared according to this invention (i.e. nylon-6 with high amounts of anhydride Surlyn^{®}) have high toughness, good mechanical strength, excellent scuff and scratch resistance and have good optical properties. All of these properties are needed for decorative and protective film applications.

**Table 1**

| Properties of Blends of Nylon 6 and Anhydride Surlyn® | | | | | | | | |
|---|---|---|---|---|---|---|---|---|
| | | Haze | Scuff Test | Notched Izod Impact | | Tensile Properties | | |
| | Anhydride Surlyn® (Wt%) | (%) | | Room Temperature (ft-lbs) | 0°C (ft-lbs) | Tensile Strength (kpsi) | Elongation (%) | Modulus (kpsi) |
| C-1 | A (20) | 68 | N/A | 2.4 | 1.7 | 6.2 | 280 | 115 |
| C-2 | A (30) | 65 | N/A | 3.6 | 2.3 | 4.9 | 150 | 105 |
| 1 | A (40) | 20 | passed | 25.8 | 21 | 4.3 | 300 | 80 |
| 2 | A (45) | 8.8 | passed | 23 | 25 | 4.2 | 250 | 65 |
| 3 | A (50) | 7.2 | passed | 22.2 | 26 | 3.6 | 250 | 57 |
| 4 | A (55) | 6.5 | passed | 21 | 25 | 3.4 | 260 | 48 |
| 5 | A (60) | 6.0 | passed | 21 | 24 | 3.8 | 340 | 45 |
| 6 | B (45) | 30 | | 27 | 27 | 5.8 | 380 | 80 |

## Claims

1. A multilayer film or sheet comprising:
a) a first oo-extruded layer of a thermoplastic composition as a protective, transparent scuff- and scratch-resistant layer; and
b) at least one layer co-extruded second polymeric layer,
wherein the thermoplastic composition comprises:
(1) from 30 to 65 weight % of a polyamide; and
(2) from 70 to 35 weight % of an ionomeric composition comprising a copolymer of:
(a) ethylene;
(b) from 5 weight % to 15 weight % of an α,β-unsaturated C₃-C₈ carboxylic acid;
(c) from 0.5 weight % to 12 weight % of at least one comonomer that is an ethylenically unsaturated dicarboxylic acid or derivative thereof selected from the group consisting of maleic acid, fumaric acid, itaconic acid, maleic anhydride, and a C₁-C₄ alkyl half ester of maleic acid; and
(d) from 0 weight % to 30 weight % of monomers selected from alkyl acrylate and alkyl methacrylate, wherein the alkyl groups have from one to twelve carbon atoms,
and wherein the carboxylic acid functionalities present are at least partially neutralized by one or more alkali metal, transition metal, or alkaline earth metal cations.

2. The article of Claim 1 wherein said polyamide is selected from the group consisting of nylon 6; nylon 6,6; nylon 11; and nylon 12.

3. The article of Claim 2 wherein component (2)(c) is present in a range from 4 to 10 weight %.

4. The article of Claim 3 wherein component (2)(c) is a C₁-C₄ alkyl half ester of maleic acid.

5. The article of Claim 1 wherein the ionomeric composition of component (2) further comprises one or more E/X/Y copolymers where E is ethylene, X is a C₃ to C₈ ethylenically unsaturated carboxylic acid, and Y is a comonomer selected from alkyl acrylate and alkyl methacrylate wherein the alkyl groups have from 1 to 8 carbon atoms, wherein X is present in a range from 2 to 30 weight % of the E/X/Y copolymer, and Y is present in a range from 0 to 40 weight % of the E/X/Y copolymer.

6. The multilayer film or sheet of Claim 1 further comprising at least one additional co-extruded third polymeric layer in contact with said second co-extruded layer.

7. The multilayer film or sheet of either Claim 1 or Claim 6 wherein one or more of said co-extruded polymeric layers contain pigments, dyes, flakes, or mixtures thereof.

8. The multilayer film or sheet of either Claim 1 or Claim 6 wherein said first co-extruded polymeric layer is clear and said second co-extruded polymeric layer contains pigments, dyes, flakes, or mixtures thereof.

9. The multilayer film or sheet of either Claim 1 or Claim 6 wherein said second co-extruded polymeric layer is selected from the group consisting of ionomer, ionomer-polyethylene blend, ionomer-polyamide blend, very low density polyethylene, ethylene polar copolymer, and blends thereof.

10. Use of the film or sheet of either Claim 1 or Claim 6 for packaging dry abrasive goods or as a transparent scuff- and scratch-resistant covering on an object.

11. An article comprising a substrate to which a film or sheet of either Claim 1 or Claim 6 is adhered as a transparent scuff- and scratch-resistant covering.

12. The article of Claim 11 that is a flooring tile or sheet, a sporting good or part of a vehicle.

13. A process for preparing the multilayer film or sheet of claim 1 by co-extrusion of the first layer and the second polymeric layer.

## Patentansprüche

1. Mehrschichtige Folie oder Platte umfassend:
a) eine erste coextrudierte Schicht einer thermoplastischen Zusammensetzung als schützede, transparente, abwetz- und kratzfeste Schicht;
und
b) mindestens eine einschichtige, coextrudierte zweite polymere Schicht, wobei die thermoplastische Zusammensetzung Folgendes umfasst:
(1) 30 bis 65 Gew.-% eines Polyamids; und
(2) 70 bis 35 Gew.-% einer ionomeren Zusammensetzung umfassend ein Copolymer von:
(a) Ethylen;
(b) 5 Gew.-% bis 15 Gew.-% einer α,β-ungesättigten C₃-C₈-Carbonsäure;
(c) 0,5 Gew.-% bis 12 Gew.-% mindestens eines Comonomers, das eine ethylenisch ungesättigte Dicarbonsäure oder ein Derivat davon ausgewählt aus der Gruppe bestehend aus Maleinsäure, Fumarsäure, Itaconsäure, Maleinsäureanhydrid und einem C₁-C₄-Alkyl-Halbester von Maleinsäure ist; und
(d) 0 Gew.-% bis 30 Gew.-% Monomere ausgewählt von Alkylacrylat und Alkylmethacrylat, wobei die Alkylgruppen ein bis zwölf Kohlenstoffatome aufweisen,
und wobei die vorliegenden Carbonsäurefunktionalitäten mindestens teilweise durch ein oder mehrere Alkalimetall-, Übergangsmetall- oder Erdalkalimetallkationen neutralisiert sind.

2. Artikel nach Anspruch 1, wobei das Polyamid aus der Gruppe ausgewählt ist bestehend aus Nylon 6; Nylon 6,6; Nylon 11; und Nylon 12.

3. Artikel nach Anspruch 2, wobei die Komponente (2)(c) in einer Menge im Bereich von 4 bis 10 Gew.-% vorliegt.

4. Artikel nach Anspruch 3, wobei die Komponente (2)(c) ein C₁-C₄-Alkyl-Halbester von Maleinsäure ist.

5. Artikel nach Anspruch 1, wobei die ionomere Zusammensetzung der Komponente (2) des Weiteren ein oder mehrere E/X/Y-Copolymere umfasst, wobei E Ethylen ist, X eine ethylenisch ungesättigte C₃- bis C₈-Carbonsäure ist und Y ein Comonomer ausgewählt von Alkylacrylat und Alkylmethacrylat ist, wobei die Alkylgruppen 1 bis 8 Kohlenstoffatome aufweisen, wobei X in einer Menge im Bereich von 2 bis 30 Gew.-% des E/X/Y-Copolymers vorliegt und Y in einer Menge im Bereich von 0 bis 40 Gew.-% des E/X/Y-Copolymers vorliegt.

6. Mehrschichtige Folie oder Platte nach Anspruch 1, des Weiteren mindestens eine zusätzliche coextrudierte dritte polymere Schicht in Kontakt mit der zweiten coextrudierten Schicht umfassend.

7. Mehrschichtige Folie oder Platte nach entweder Anspruch 1 oder Anspruch 6, wobei eine oder mehrere der coextrudierten polymeren Schichten Pigmente, Farbstoffe, Flocken oder Mischungen davon enthält/enthalten.

8. Mehrschichtige Folie oder Platte nach entweder Anspruch 1 oder Anspruch 6, wobei die erste coextrudierte polymere Schicht klar ist und die zweite coextrudierte polymere Schicht Pigmente, Farbstoffe, Flocken oder Mischungen davon enthält.

9. Mehrschichtige Folie oder Platte nach entweder Anspruch 1 oder Anspruch 6, wobei die zweite coextrudierte polymere Schicht aus der Gruppe ausgewählt ist bestehend aus Ionomer, einer Ionomer-Polyethylenmischung, Ionomer-Polyamidmischung, Polyethylen sehr niedriger Dichte, polarem Ethylencopolymer und Mischungen davon.

10. Verwendung der Folie oder Platte nach entweder Anspruch 1 oder Anspruch 6 zum Verpacken trockener abrasiver Waren oder als transparente abwetz- und kratzfeste Bedeckung eines Objekts.

11. Artikel umfassend ein Substrat, an das eine Folie oder Platte nach entweder Anspruch 1 oder Anspruch 6 als transparente abwetz- und kratzfeste Bedeckung befestigt ist.

12. Artikel nach Anspruch 11, der eine Fußbodenfliese oder -platte, ein Sportartikel oder Teil eines Fahrzeugs ist.

13. Verfahren für die Herstellung der mehrschichtigen Folie oder Platte nach Anspruch 1 durch Coextrusion der ersten Schicht und der zweiten polymeren Schicht.

## Revendications

1. Film ou feuille multicouche comprenant :
a) une première couche co-extrudée d'une composition thermoplastique sous la forme d'une couche protectrice transparente résistant à l'abrasion et aux rayures ;
et
b) au moins une deuxième couche polymère co-extrudée,
la composition thermoplastique comprenant :
(1) de 30 à 65 % en poids d'un polyamide ; et
(2) de 70 à 35 % en poids d'une composition ionomère comprenant un copolymère de :
(a) éthylène ;
(b) de 5 % en poids à 15 % en poids d'un acide carboxylique α,β-insaturé en C₃-C₈ ;
(c) de 0,5 % en poids à 12 % en poids d'au moins un comonomère représentant un acide dicarboxylique à insaturation éthylénique ou un dérivé de celui-ci choisi parmi le groupe constitué par l'acide maléique, l'acide fumarique, l'acide itaconique, l'anhydride maléique et un semi-ester alkylique en C₁-C₄ de l'acide maléique ; et
(d) de 0 % en poids à 30 % en poids de monomères choisis parmi l'acrylate d'alkyle et le méthacrylate d'alkyle, les groupes alkyle possédant un à douze atomes de carbone,
et dans lequel les fonctionnalités d'acide carboxylique présentes sont au moins partiellement neutralisées par un ou plusieurs cations de métal alcalin, métal de transition ou métal alcalino-terreux.

2. Article selon la revendication 1, dans lequel ledit polyamide est choisi parmi le groupe constitué par le nylon 6, le nylon 6,6, le nylon 11, et le nylon 12.

3. Article selon la revendication 2, dans lequel le composant (2)(c) est présent dans une plage allant de 4 à 10 % en poids.

4. Article selon la revendication 3, dans lequel le composant (2)(c) est un semi-ester alkylique en C₁-C₄ de l'acide maléique.

5. Article selon la revendication 1, dans lequel la composition ionomère du composant (2) comprend en outre un ou plusieurs copolymères E/X/Y où E représente l'éthylène, X représente un acide carboxylique à insaturation éthylénique en C₃ à C₈, et Y représente un comonomère choisi parmi l'acrylate d'alkyle et le méthacrylate d'alkyle, les groupes alkyle possédant 1 à 8 atomes de carbone, X étant présent dans une plage allant de 2 à 30 % en poids du copolymère E/X/Y, et Y est présent dans une plage allant de 0 à 40 % en poids du copolymère E/X/Y.

6. Film ou feuille multicouche selon la revendication 1, comprenant en outre au moins une troisième couche polymère co-extrudée supplémentaire en contact avec ladite deuxième couche co-extrudée.

7. Film ou feuille multicouche selon la revendication 1 ou bien la revendication 6, dans lequel une ou plusieurs desdites couches polymères co-extrudées contiennent des pigments, des colorants, des flocons ou des mélanges de ceux-ci.

8. Film ou feuille multicouche selon la revendication 1 ou bien la revendication 6, dans lequel ladite première couche polymère co-extrudée est translucide et ladite deuxième couche polymère co-extrudée contient des pigments, des colorants, des flocons ou des mélanges de ceux-ci.

9. Film ou feuille multicouche selon la revendication 1 ou bien la revendication 6, dans lequel ladite deuxième couche polymère co-extrudée est choisie parmi le groupe constitué par ionomère, mélange ionomère-polyéthylène, mélange ionomère-polyamide, polyéthylène très basse densité, copolymère polaire d'éthylène, et des mélanges de ceux-ci.

10. Utilisation du film ou de la feuille selon la revendication 1 ou bien la revendication 6, pour le conditionnement de marchandises abrasives sèches ou sous la forme d'un revêtement transparent résistant à l'abrasion et aux rayures appliqué à un objet.

11. Article comprenant un substrat auquel adhère un film ou une feuille selon la revendication 1 ou bien la revendication 6 sous la forme d'un revêtement transparent résistant à l'abrasion et aux rayures.

12. Article selon la revendication 11, consistant en une dalle ou une feuille de revêtement de sol, un article de sport ou une pièce de véhicule.

13. Procédé de préparation du film ou de la feuille multicouche selon la revendication 1 par co-extrusion de la première couche et de la deuxième couche polymère.
